# EUROPÄISCHE PATENTSCHRIFT

(11) **EP 0 542 670 B1**
(45) Veröffentlichungstag und Bekanntmachung des Hinweises auf die Patenterteilung: **18.12.1996**
(21) Anmeldenummer: 92810754.9
(22) Anmeldetag: 06.10.1992
(51) Int. Cl.: G07F 13/06, G07F 11/42

(54) **Getränkeautomat**
Automatic dispenser for beverages
Distributeur automatique de boissons

(30) Priorität: 13.11.1991 DE 4137324
(43) Veröffentlichungstag der Anmeldung: 19.05.1993
(73) Patentinhaber: CIS Elektrogeräte AG, 8621 Wetzikon (CH)
(72) Erfinder: Frei, Hanspeter, CH-8618 Oetwil am See (CH)
(74) Vertreter: Rottmann, Maximilian R.

(56) Entgegenhaltungen:
- US-A- 3 294 281
- US-A- 4 911 332

## Beschreibung

Die Erfindung betrifft einen Getränkeautomaten, wie er im Oberbegriff des Patentanspruchs 1 beschrieben ist (US-A-4 911 332).

Getränkeautomaten dieser Art sind seit längerem bekannt und werden an den verschiedensten Orten zur wahlweisen Zubereitung von Getränken, insbesondere Kaffee, Tee, Schokolade (Ovomaltine), sowie Suppen eingesetzt. Bei den Tee- und Schokolade-Getränken besteht zudem meist die Möglichkeit, zwischen einem Kalt- und Warmgetränk zu wählen. Das Getränk wird in der Regel erst nach Einwurf von Geld, einem Jeton oder nach Entwerten einer Taxcard zubereitet. Es sind aber auch Ausführungen bekannt, bei denen das Getränk auf gratis auf Tastendruck zubereitet wird.

Getränkeautomaten dieser Art müssen verschiedene Kriterien zugleich erfüllen. Zum einen müssen sie kostengünstig hergestellt werden können, da ein starker Konkurrenzdruck auf diesem Gebiet besteht, und zum andern müssen sie zuverlässig sein, da ein Ausfall des Getränkeautomaten den Unmut der Benutzer sowie einen Ertragsausfall des Betreibers mit sich bringt. Im weiteren sollen diese Automaten so aufgebaut sein, dass eine Betriebsstörung schnell und einfach behoben werden kann. So sollen z.B. die Verschleissteile gut zugänglich im Getränkeautomaten angebracht sein. Im weiteren sollte der Getränkesutomat so aufgebaut sein, dass die der Verschmutzung unterliegenden Teile vom Bedienpersonal in kurzer Zeit derart gereinigt werden können, dass der Automat den hygienischen Anforderungen gerecht wird.

Eine weitere Forderung ist, dass der Getränkeautomat allfälligen Erweiterungswünschen bezüglich der Getränkeauswahl gerecht wird, das heisst, dass er wenn möglich so aufgebaut sein soll, dass auf einfache Art und Weise zusätzliche Getränkesorten angeboten werden können.

Die Auswahl und Zubereitung eines Getränks mit einem derartigen Getränkeautomaten geht in etwa folgendermassen vor sich: Der Benutzer wählt das von ihm gewünschte Getränk mittels einer Anwahltaste am Getränkeautomat aus. Anschliessend wird der Becher zur Aufnahme des Getränks in Stellung gebracht; dann wird die Wasserpumpe eingeschaltet. Das geförderte Wasser durchläuft bei Wahl eines Heissgetränks einen Heisswasserbereiter sowie eine Mischeinheit und fliesst dann schliesslich in den Becher ein. Bei Wahl eines Kaltgetränks tritt anstelle des Heiswasserbereiters ein Bypass in Aktion. Beim Durchlaufen des Wassers durch die Mischeinheit wird diesem die entsprechende, durch ein Förderorgan des Vorratsbehälters geförderte Menge Getränkepulver (Tee, Suppe, Schokolade, Kaffee und/oder Milchpulver) beigemischt.

Wählt nun der Benutzer mittels Tastendruck am Bedienteil ein bestimmtes Getränk aus, so wird dieser Tastendruck von einer eingebauten Mikroprozessor-Steuerung registriert und das entsprechende Programm wird gestartet. Für jedes Getränk ist ein entsprechendes Software-Programm vorhanden. Wird nun beispielsweise eine heisse Schokolade gewünscht, so ist der eingebauten Steuerung bekannt, dass für deren Zubereitung beispielsweise 2 dl Heiss-Wasser sowie 10 Gramm Getränkepulver notwendig sind. Die Zudosierung des Schokoladenpulvers wird aus Kostengründen derart realisiert, dass die notwendige Pulver-Menge über die Einschaltzeit des Pulverförderers gesteuert wird. Für die Zubereitung einer heissen Schokolade muss die Pumpe zum Fördern des Wassers ca. 20 Sekunden eingeschaltet werden. Die Zeitdauer ist deshalb relativ hoch, da das Wasser mittels eines Durchlauferhitzers erwärmt wird und diesen daher nicht beliebig schnell durchfliessen kann. Die Zudosierungszeit für das Schokoladenpulver ist mit ca. 6 Sekunden zu veranschlagen. Die Pulver werden dem durchlaufenden Heisswasser (oder bei Kaltgetränken dem Kaltwasser) zugemischt, so dass beim Einlaufen des Schokoladen-Getränks in den Becher das Getränk bereits gut durchmischt ist.

Da die Zudosierungszeit des Pulvers zum Heisswasser wesentlich kürzer als die Durchlaufzeit des Wassers ist, sieht es für den Benutzer in der Praxis so aus, dass nur während ca. 8 Sekunden ein sichtbar eingefärbtes Schokoladengetränk in den Becher einfliesst, und dass während der restlichen 12 Sekunden bloss heisses Wasser einfliesst. Dies hat einerseits psychologische Auswirkungen, da der Benutzer das Gefühl hat, dass er für sein Geld bloss 50% vom gewünschten Getränk erhält, und zum anderen kommt es vor, dass einzelne Benutzer den Becher vor Ende des Heisswasserauslaufs wegziehen, da sie das Gefühl haben, dass das Wasser nicht mehr zum eigentlichen Getränke-Aufbereitungs-Vorgang dazugehört. Dies hat natürlich den Nachteil, dass das in dem Getränkeautomaten vorhandene Auffangbecken für "Restwasser" sehr schnell gefüllt ist, und dass es daher zum Überlaufen dieses Auffangbeckens kommen kann.

Damit das zubereitete Schokoladengetränk während der ganzen "Einlaufdauer" als sichtlich mit Pulver durchsetztes Getränk in den Becher einfliesst, kann nicht einfach die Pulverzudosierungszeit verlängert werden, da sonst bei der Zubereitung eines Espressos, bei dem ja viel weniger Wasser auf eine gleich grosse Menge Getränkepulver kommt, das Gegenteil passieren würde, indem nämlich das notwendige Kaffeepulver nicht in dem zur Verfügung stehenden Heisswasser während dessen Durchlaufen aufgelöst werden könnte. Die pro Zeiteinheit geförderte Getränkepulvermenge kann auch nicht variiert werden, da sonst eine wesentlich aufwendigere Steuerung des Antriebsmotors eingesetzt werden müsste.

Bei den bisher bekannten Getränkeautomaten ist zum Antrieb der Pulverfördermittel jeweils ein separater Antriebsmotor mit Getriebe vorhanden, so dass bei einem Getränkeautomaten, welcher z.B. vier verschiedene Getränkesorten zur Auswahl stellt, auch vier Antriebsmotoren samt zugeordneten Getrieben erforderlich sind.

Die US-A-3 294 281 offenbart einen Verkaufsautomaten, bei dem ein einziger Motor selektiv eine von mehreren elektromechanisch kuppelbaren Förderschnecken antreibt.

Es ist daher die Aufgabe der Erfindung, die vorerwähnten Nachteile zu vermeiden und einen Getränkeautomaten gemäss Oberbegriff des Patentanspruchs 1 so weiterzuentwickeln, dass er mit weniger Aufwand als bisher und damit preisgünstiger hergestellt werden kann und dass für den Betreiber des Getränkeautomaten die Möglichkeit besteht, Verschleissteile sowie defekte Bauteile auf einfache Art selber auszuwechseln.

Gemäss der Erfindung wird diese Aufgabe durch die im kennzeichnenden Teil des Patentanspruchs 1 definierten Merkmale gelöst. Weiterbildungen und besondere Ausführungsarten sind in den abhängigen Ansprüchen 2 bis 13 beschrieben.

Eine besonders vorteilhafte Ausführungsform des Getränkeautomaten kann dadurch erreicht werden, dass das Getränkepulver beim Durchlaufen des Wassers in Intervallen zudosiert wird. Um die Förderschnecke an der Antriebs-Welle einzukuppeln, braucht nur jeweils ein Elektro-Magnet ein- und ausgeschaltet zu werden. Dadurch ist es überhaupt erst möglich, eine schubweise Zudosierung zu realisieren, da die relativ grosse Massenträgheit, welche ein Motor mit der entsprechenden angekoppelten Mechanik hat, hier nicht zum Tragen kommt und daher ein intervallmässiges Fördern und Zudosieren in kurzen Zeitabständen möglich ist.

Eine weitere vorteilhafte Ausführungsform des Getränkeautomaten kann dadurch erreicht werden, dass die Vorratsbehälter sowie die den Vorratsbehältern zugeordneten Getriebe mit den Elektromagneten modular aufgebaut sind. Dadurch ist es möglich, einen solchen Getränkeautomaten nachträglich aufzurüsten, d.h. dass noch ein weiterer oder mehrere zusätzliche Vorratsbehälter mit den entsprechenden Fördereinheiten zusätzlich eingesetzt werden können, wenn im Gehäuse noch Platz vorhanden ist.

Um die Antriebsschnecken der einzelnen Fördereinheiten zu koppeln, können federelastische Verbindungen vorgesehen sein, welche den Vorteil haben, dass zwangsläufig vorhandene achsiale wie radiale Versätze von diesen Verbindungen aufgenommen werden.

Ein weiterer Vorteil des modularen Aufbaus besteht darin, dass sowohl für einfache Getränkeautomaten, mit welchen z. B. "nur" Kaffeegetränke zubereitet werden können, wie auch für aufwendigere Getränkeautomaten, welche durchaus drei oder mehr verschiedene Getränkesorten zur Auswahl stellen, dieselben Module verwendet werden. Ausserdem besteht ein weiterer wesentlicher Vorteil darin, dass bei einem Defekt oder bei entsprechender Abnützung die Module, welche im wesentlichen aus einem Elektro-Magneten, einer achsial verschiebbaren Welle mit aufgesetztem Zahnrad sowie einer Antriebsschnecke bestehen, schnell und einfach ausgetauscht werden können, und zwar sowohl die einzelnen Teile wie auch die gesamte Einheit.

Ein Ausführungsbeispiel des erfindungsgemässen Getränkeautomaten wird im folgenden anhand der beiliegenden Zeichnungen näher erläutert. In den Zeichnungen zeigt:
- Fig.1: Einen Längsschnitt durch den Getränkeautomaten;
- Fig.2: Einen querschnitt durch den Getränkeautomaten;
- Fig.3: Einen Schnitt entlang einer horizontalen Ebene durch den Getränkeautomaten;
- Fig.4: Einen vergrösserten Ausschnitt aus der Fig.2; und
- Fig.5: Eine vergrösserte Darstellung der Module.

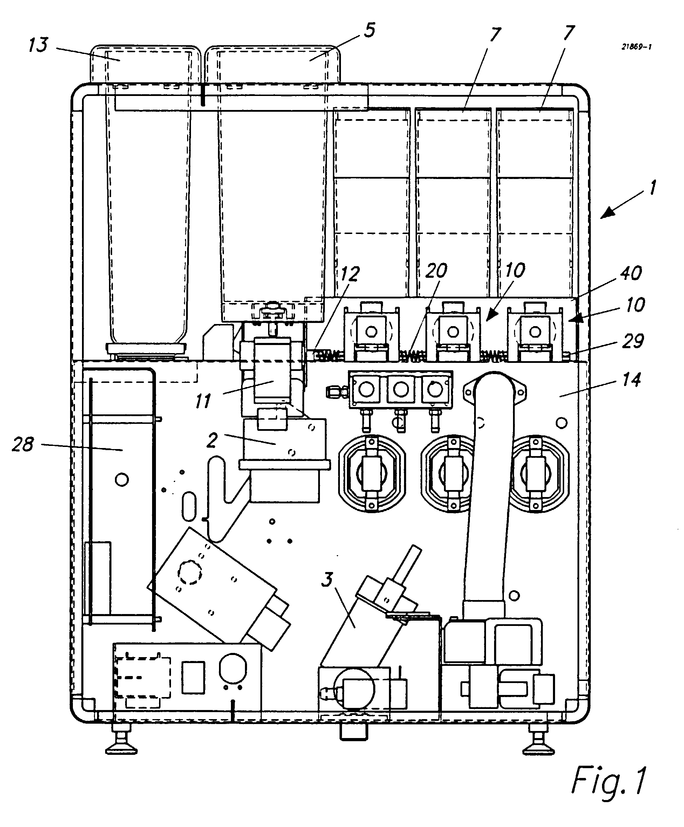

Die Fig.1 zeigt in vereinfachter Darstellung den prinzipiellen Aufbau des erfindungsgemässen Getränkeautomaten im Längsschnitt. Das Gehäuse 1 weist eine Befestigungsplatte 14 auf, an welcher, nebst anderen Teilen, ein Heisswasserbereiter 2, eine Pumpe 3, sowie ein Antriebsmotor 11 befestigt sind. Am oberen Ende der Befetigungsplatte 14 ist eine Befestigungsschiene 40 angebracht, an welcher einzelne Getriebemodule 10 eingehängt sind. Ein Kaltwasserbehälter 5 sowie mehrere Getränkepulver-Vorratsbehälter 7 sind im oberen Teil des Gehäuses 1 untergebracht. Darüberhinaus beherbergt das Gehäuse 1 auch ein Steuerorgan 28 zur Steuerung des Ablaufs der Getränkezubereitung.

Ausserdem kann noch ein Kaffeebohnen-Vorratsbehälter 13 mit einem Kaffeemahlwerk (nicht abgebildet) zur Zubereitung von Bohnen-Kaffee vorhanden sein. Der besseren Übersicht wegen, sind die notwendigen Verbindungsschläuche nicht eingezeichnet.

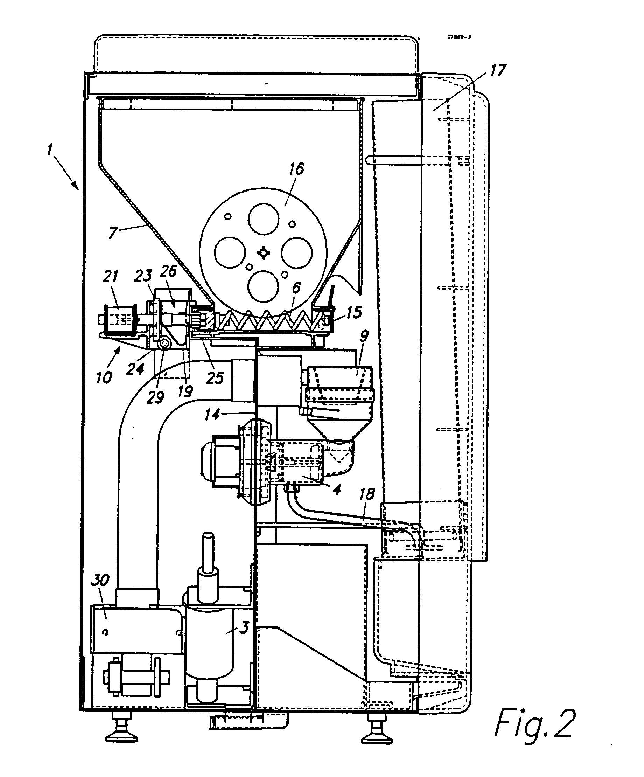

Aus der Querschnittsdarstellung gemäss Fig.2 ist der Getränkepulver-Vorratsbehälter 7 mit einem darin angeordneten Mischrad 16 ersichtlich, welches das problemlose Fördern des im Vorratsbehälter 7 gespeicherten Getränkepulvers durch eine Förderschnecke 6 unterstützt. Das durch die Förderschnecke 6 geförderte Getränkepulver öffnet eine Klappe 15 so, dass das Getränkepulver durch die entstehende Öffnung in einen Trichter 9 einer Mischeinheit 4 fällt und in dieser Mischeinheit dann mit dem durchfliessenden Wasser vermischt wird, um anschliessend durch eine Leitung 18 in einen Becher (nicht dargestellt) einfliessen zu können. Durch eine Absaugvorrichtung 30 wird verhindert, dass der beim Zubereiten von Heissgetränken entstehende Dampf das Getränkepulver im Bereich der Klappe 15 verklebt. Röhren 17 dienen als Vorratsbehälter für die Getränke-Becher.

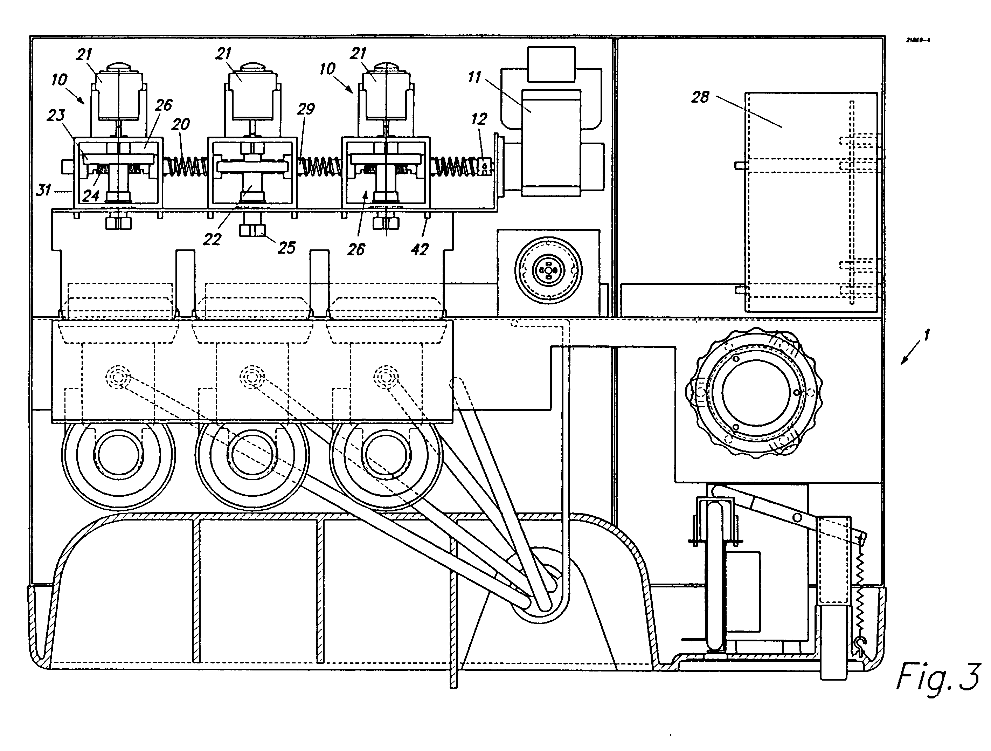

Beim vorliegenden Ausführungsbeispiel sind drei Getränkepulver-Vorratsbehälter 7 vorhanden, die je eine Förderschnecke 6 aufweisen. Zum wahlweisen Antrieb derselben ist gemäss Fig.3 ein gemeinsamer Antriebsmotor 11 und drei je einem Getränkepulver-Vorratsbehälter 7 zugeordnete Getriebemodule 10 vorgesehen. Die Antriebswellen aller drei Getriebemodule 10 fluchten, d.h. liegen auf derselben Achse. Der Antriebsmotor 11 weist eine ebenfalls mit den Antriebswellen der Getriebemodule 10 fluchtend angeordnete Antriebswelle 12 auf, welche durch ein federelastisches Verbindungselement 20, z.B. eine Spiralfeder, mit der Antriebswelle 29 und damit mit der Antriebsschnecke 24 eines ersten, einen Teil eines Getriebemoduls 10 bildenden Getriebes 26 gekoppelt ist. Die Antriebswelle 29 und damit die Antriebsschnecke 24 des nächsten Getriebes ist dann wiederum mittels eines Verbindungselements 20 mit der ersten Antriebsschnecke 24 und die dritte Antriebsschnecke 24 mit der zweiten Antriebsschnecke 24 ebenfalls mittels eines Verbindungselements 20 gekoppelt, so dass alle Antriebsschnecken 24 untereinander und mit dem Antriebsmotor 11 mechanisch verbunden sind.

Das Getriebe 26 des mittleren der drei dargestellten Getriebemodule 10 ist in eingerastetem Zustand dargestellt. Das bedeutet, dass in dieser Position der Antriebsmotor 11 über das mittlere Getriebe 26 die Förderschnecke 6 des mittleren Getränkepulver-Vorratsbehälters 7 antreibt, wobei die Antriebsschnecken 24 der beiden anderen Getriebe leer mitlaufen.

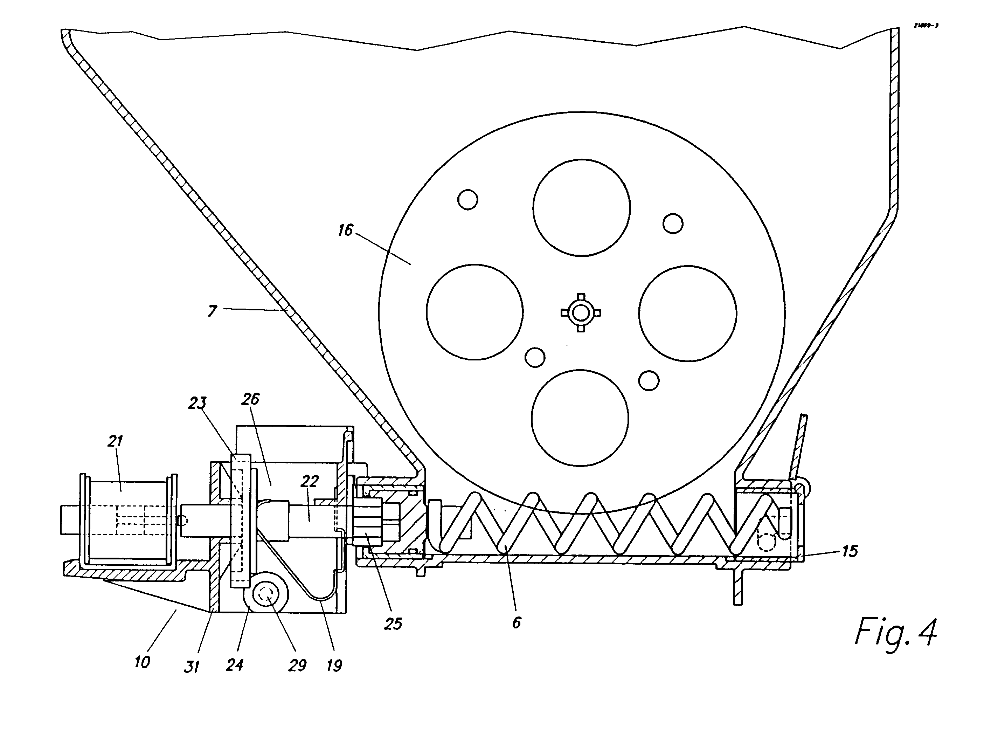

Aus der Fig. 4 ist der Aufbau und die Funktionsweise des Getriebes 26 in Verbindung mit der Förderschnecke 6 ersichtlich. Das Getriebemodul 10 weist einen Tragrahmen 31 auf, in welchem eine achsial verschiebbare Abtriebswelle 22 sowie in rechtem Winkel dazu die Antriebswelle 29 mit der Antriebsschnecke 24 drehbar gelagert sind. Koachsial zur Abtriebswelle 22 ist ein Elektromagnet 21 am Rahmen 31 befestigt. Die Abtriebswelle 22 trägt ein Schneckenrad 23 und besitzt an ihrem einen Ende einen Kupplungsteil 25. Am anderen Ende steht die Abtriebswelle 22 mit dem Elektromagneten 21 in Wirkverbindung. Wird der Elektromagnet 21 unter Strom gesetzt, so wird die Abtriebswelle 22 in Richtung der Förderschnecke 6 verschoben. Dadurch greift das Schneckenrad 23 in die Antriebsschnecke 24 der Antriebswelle 29 ein, und gleichzeitig wird die Abtriebswelle 22 durch den Kupplungsteil 25 an die Förderschnecke 6 angekuppelt. Dadurch besteht nun eine antriebsmässige Verbindung zwischen der Antriebswelle 29 des Getriebes 26 und der Förderschnecke 6. Durch die Vorspannkraft einer Feder 19 hat die Abtriebswelle 22 das Bestreben, in die Ruhestellung (Ausrastposition) zurückzukehren; das bedeutet, dass die Abtriebswelle 22 nur solange zugekuppelt bleibt, wie der Elektromagnet 21 auch unter Strom steht.

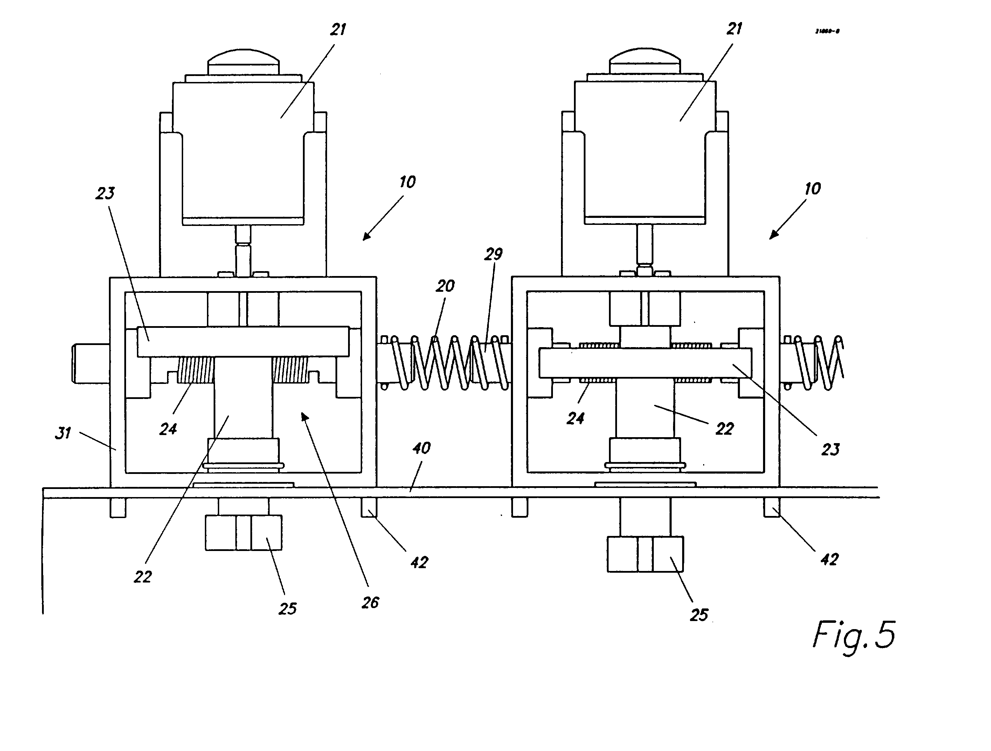

In Fig.5 sind zwei Getriebemodule 10 dargestellt. Die Abtriebswelle 22 mit dem Schneckenrad 23 ist jeweils drehbar im Rahmen 31 gelagert. Der ebenfalls am Rahmen 31 befestigte Elektromagnet 21 steht mit der Abtriebswelle 22 in Wirkverbindung. Beim rechts abgebildeten Getriebemodul 10 steht der Elektromagnet 21 unter Strom und schiebt dadurch die Abtriebswelle 22 gegen die Befestigungsschiene 40. Dadurch kuppelt das Schneckenrad 23 in die Antriebsschnecke 24 und das Kupplungsteil 25 in die (hier nicht dargestellte) Förderschnecke 6 ein. Damit ist die mechanische Verbindung zwischen der Antriebsschnecke 24 und der Förderschnecke 6 hergestellt.

Beim linken der beiden abgebildeten Getriebemodule 10 ist der Elektromagnet 21 in Ruhestellung dargestellt. Dadurch, dass zur Kopplung der Antriebsschnecken 24 federelastische Verbindungselemente 20, z.B. Spiralfedern, zum Einsatz kommen, können sowohl radiale wie auch achsiale Toleranzen ausgeglichen werden. Die Module 10 sind mittels Führungsnasen 42 in Öffnungen der Befestigungsschiene 40 eingehängt und mittels federnden, hier nicht näher dargestellten Rasthaken in der Befestigungsschiene 40 eingerastet.

Dadurch, dass zum Fördern des Getränkepulvers nur noch ein Antriebsmotor vorhanden ist, wird einerseits der Preis eines erfindungsgemässen Getränkeautomaten deutlich reduziert und andererseits kann dadurch auch noch das Gewicht gesenkt werden, was sich vor allem bei Automaten, welche an einer Wand befestigt werden, positiv auswirken dürfte.

## Patentansprüche

1. Getränkeautomat zur wahlweisen Zubereitung von verschiedenen Kalt- und/oder Warmgetränken aus in Wasser gelösten Getränkepulvern, welcher ein Gehäuse (1) und darin einen Heisswasserbereiter (2), eine Pumpe (3) zum Fördern des Wassers, mehrere Vorratsbehälter (7) mit Getränkepulver, mindestens eine Mischeinheit (4) zum Mischen des Getränkepulvers mit dem Wasser sowie ein Steuerorgan (28) zur Steuerung des Ablaufs der Getränkezubereitung aufweist und wobei jedem Vorratsbehälter (7) Fördermittel (6) zum Fördern des Getränkepulvers in die Mischeinheit (4) zugeordnet sind, dadurch gekennzeichnet, dass zum Antrieb der Fördermittel (6) für Getränkepulver ein gemeinsamer Antriebsmotor (11) vorhanden ist, und dass jedem Vorratsbehälter (7) ein Getriebe (26) zugeordnet ist, dessen Antriebswelle (29) mit dem gemeinsamen Antriebsmotor (11) verbunden ist und welches eine Abtriebswelle (22) zum Antrieb des zugeordneten Fördermittels (6) des Vorratsbehälters (7) aufweist, wobei bei jedem Getriebe (26) die Antriebswelle (29) senkrecht zur Abtriebswelle (22) verläuft, welche ihrerseits achsial verschiebbar ist, ein Schneckenrad (23) trägt und an ihrem dem Vorratsbehälter (7) zugewandten Ende einen Kupplungsteil (25) zum Ankuppeln an die Fördermittel des Vorratsbehälters (7) besitzt, und dass ein Elektromagnet (21) vorgesehen ist, welcher in Wirkverbindung mit der Abtriebswelle (22) steht, so dass jedes einzelne Getriebe (26) wahlweise ein- bzw. auskuppelbar ist.

2. Getränkeautomat nach Anspruch 1, dadurch gekennzeichnet, dass die beiden Wellen (22, 29) jeweils drehbar in einem Tragrahmen (31) gelagert sind, und dass der Elektromagnet (21) an diesem Tragrahmen (31) befestigt ist.

3. Getränkeautomat nach den Ansprüchen 1 und 2, dadurch gekennzeichnet, dass die Antriebswelle (29) eine Antriebsschnecke (24) aufweist, mit welcher das auf der Abtriebswelle (22) angeordnete Schneckenrad (23) in Eingriff bringbar ist.

4. Getränkeautomat nach Anspruch 3, dadurch gekennzeichnet, dass die Einkupplung des Zahnrads (23) an die Antriebsschnecke (24) wie auch die Einkupplung des Kupplungsteils (25) an die Fördermittel durch Betätigung des Elektromagneten (21) erfolgt.

5. Getränkeautomat nach den Ansprüchen 1 bis 3, dadurch gekennzeichnet, dass jedes Getriebe (26) eine Feder (19) aufweist, welche die Abtriebswelle (22) in ihre ausgekuppelte Stellung zu bewegen bestrebt ist.

6. Getränkeautomat nach einem der vorhergehenden Ansprüche, dadurch gekennzeichnet, dass die einzelnen Getriebe (26) mit fluchtenden Antriebswellen (29) nebeneinander angeordnet sind, wobei die Antriebswellen (29) durch federelastische Verbindungselemente (20) untereinander sowie mit dem Antriebsmotor (11) gekoppelt sind.

7. Getränkeautomat nach Anspruch 6, dadurch gekennzeichnet, dass die Elektromagneten (21), die Schneckenräder (23), die Abtriebswellen (22), die Antriebsschnecken (24) sowie die federelastischen Verbindungselemente (20) einzeln durch den Benutzer auswechselbar sind.

8. Getränkeautomat nach Anspruch 1, dadurch gekennzeichnet, dass die Fördermittel zum Fördern des Getränkepulvers jeweils eine drehbar in den Getränkepulver-Vorratsbehältern (7) angeordnete Förderschnecke (6) aufweisen.

9. Getränkeautomat nach Anspruch 8, dadurch gekennzeichnet, dass die Förderschnecken (6) jeweils fluchtend mit den Abtriebswellen (22) des zugeordneten Getriebes (26) angeordnet sind.

10. Getränkeautomat nach Anspruch 2, dadurch gekennzeichnet, dass die Getriebe (26) zusammen mit den Elektromagneten (21) und den Tragrahmen (31) als austauschbare Getriebemodule (10) aufgebaut sind.

11. Getränkeautomat nach Anspruch 10, dadurch gekennzeichnet, dass im Gehäuse (1) eine Befestigungsschiene (40) mit rasterförmig angeordneten AufnahmeÖffnungen zum Befestigen der Getriebemodule (10) vorgesehen ist.

12. Getränkeautomat nach Anspruch 11, dadurch gekennzeichnet, dass die Getriebe (26) mittels Führungsnasen (42) in den Aufnahme-Öffnungen der Befestigungsschiene (40) eingehängt und mittels eines federnden Rasthakens einrastbar sind.

13. Getränkeautomat nach einem der Ansprüche 2 bis 12, dadurch gekennzeichnet, dass die Getriebe (26) durch den Elektromagneten (21) intervallweise zukuppelbar sind, so dass eine erforderliche Gesamtförderzeit in mehrere Intervalle aufteilbar ist.

## Claims

1. An automatic dispenser for beverages for the selectable preparation of various cold and/or hot drinks from beverage powders dissolved in water, which has a casing (1) and in it, a hot water generator (2), a pump (3) for conveying the water, several stock containers (7) with beverage powder, at least one mixer unit (4) for mixing the beverage powder with the water, as well as a control unit (28) for controlling the sequence of the preparation of the beverage, and in which arrangement each stock container (7) is assigned conveyance means (6) for conveying the beverage powder into the mixer unit (4), characterized in that a joint drive motor (11) is provided for driving the conveyance means (6) for the beverage powders, and that each stock container (7) is assigned a gear (26) whose drive shaft (29) is connected to the joint drive motor (11) and which has a driven shaft (22) for driving the assigned conveyance means (6) of the stock container (7), in which arrangement the drive shaft (29) extends in each gear (26) perpendicularly to the driven shaft (22) which, for its part, is axially displaceable, carries a worm wheel (23) and has at its end facing the stock container (7) a coupling element (25) for coupling to the conveyance means of the stock container (7), and that an electromagnet (21) is provided which is disposed in an operative connection with the driven shaft (22), so that each individual gear (26) can be selectably engaged or disengaged.

2. An automatic dispenser for beverages according to claim 1, characterized in that the two shafts (22, 29) are each mounted for rotation in a supporting frame (31), and that the electromagnet (21) is secured on this supporting frame (31).

3. An automatic dispenser for beverages according to claims 1 and 2, characterized in that the drive shaft (29) has a drive worm (24) wherewith the worm wheel (23) arranged on the driven shaft (22) can be brought into engagement.

4. An automatic dispenser for beverages according to claim 3, characterized in that the engagement of the gear wheel (23) with the drive worm (24), as well as the engagement of the coupling element (25) with the conveyance means is effected by actuating the electromagnet (21).

5. An automatic dispenser for beverages according to claims 1 to 3, characterized in that each gear (26) has a spring (19) which tends to move the driven shaft (22) into its disengaged position.

6. An automatic dispenser for beverages according to one of the preceding claims, characterized in that the individual gears (26) are arranged side by side with their drive shafts (29) being aligned, in which arrangement the drive shafts (29) are connected to one another, as well as to the drive motor (11) by means of spring-elastic connecting elements (20).

7. An automatic dispenser for beverages according to claim 6, characterized in that the electromagnets (21), the worm wheels (23), the driven shafts (22), the drive worms (24) as well as the spring-elastic connecting elements (20) can be individually changed by the user.

8. An automatic dispenser for beverages according to claim 1, characterized in that the conveyance means for conveying the beverage powder each have a conveyance worm (6) arranged for rotation in the stock containers (7) for the beverage powders.

9. An automatic dispenser for beverages according to claim 8, characterized in that the conveyance worms (6) are each arranged in alignment with the driven shafts (22) of the assigned gear (26).

10. An automatic dispenser for beverages according to claim 2, characterized in that the gears (26) are composed, together with the electromagnets (21) and the supporting frames (31), as exchangeable gear modules (10).

11. An automatic dispenser for beverages according to claim 10, characterized in that, in the casing (1) there is provided a mounting rail (40) with receiving openings arranged in the form of a grid, for securing the gear modules (10).

12. An automatic dispenser for beverages according to claim 11, characterized in that the gears (26) are suspended in the receiving openings of the mounting rail (40) by means of guide projections (42) and can be engaged by means of an elastic engagement hook.

13. An automatic dispenser for beverages according to one of claims 2 to 12, characterized in that the gears (26) can be engaged interval-wise by means of the electromagnet (21), so that a required overall conveyance time can be subdivided into several intervals.

## Revendications

1. Distributeur automatique de boissons pour la préparation de différentes boissons chaudes et/ou froides au choix à partir de poudres pour boissons dissoutes dans de l'eau, qui présente un bâti (1) contenant un chauffe-eau (2), une pompe (3) pour l'acheminement de l'eau, plusieurs réservoirs (7) avec de la poudre pour boissons, au moins un mélangeur (4) pour mélanger la poudre pour boissons avec l'eau ainsi qu'un organe de commande (28) pour la commande du déroulement de la préparation des boissons et pour lequel des moyens de transport (6) sont affectés à chaque réservoir (7) pour l'acheminement de la poudre pour boissons dans le mélangeur (4), caractérisé en ce que, pour l'entraînement des moyens de transport (6) de la poudre pour boissons, un moteur de commande (11) commun est présent, et qu'un engrenage (26) est affecté à chaque réservoir (7), dont l'arbre moteur (29) est relié au moteur de commande commun (11) et qui présente un arbre moteur (22) pour l'entraînement des moyens de transport (6) correspondant du réservoir (7), l'arbre moteur (29) de chaque engrenage (26) s'étendant verticalement par rapport à l'arbre moteur (22), lequel arbre, de son côté, est déplaçable axialement, porte une roue tangente (23) et possède à son extrémité tournée vers le réservoir (7) un demi-accouplement (25) pour l'accouplement sur les moyens de transport du réservoir (7), et qu'un électro-aimant (21) est prévu qui est en connexion active avec l'arbre moteur (22) de façon que chaque engrenage (26) peut être au choix embrayé ou débrayé.

2. Distributeur automatique de boissons selon la revendication 1, caractérisé en ce que les deux arbres (22, 29) sont logés chacun de manière pivotante dans un cadre porteur (31) et que l'électro-aimant (21) est fixé sur ce cadre porteur (31).

3. Distributeur automatique de boissons selon l'une quelconque des revendications 1 et 2, caractérisé en ce que l'arbre moteur (29) présente une vis sans fin motrice (24) avec laquelle la roue tangente (23) disposée sur l'arbre moteur (22) peut être mise en contact.

4. Distributeur automatique de boissons selon la revendication 3, caractérisé en ce que l'accouplement de la roue d'engrenage (23) sur la vis sans fin motrice (24) tout comme l'accouplement du demi-accouplement (25) sur les moyens de transport est réalisé par l'actionnement de l'électro-aimant (21).

5. Distributeur automatique de boissons selon l'une quelconque des revendications 1 à 3, caractérisé en ce que chaque engrenage (26) présente un ressort (19) dont la tendance est de déplacer l'arbre moteur (22) dans sa position désembrayée.

6. Distributeur automatique de boissons selon l'une quelconque des revendications précédentes, caractérisé en ce que les engrenages (26) individuels sont disposés les uns à côté des autres avec les arbres moteur (29) en alignement, les arbres moteur (29) étant couplés les uns aux autres par des attaches à déformation (20) ainsi qu'avec le moteur de commande (11).

7. Distributeur automatique de boissons selon la revendication 6, caractérisé en ce que les électro-aimants (21), les roues d'engrenage (23), les arbres moteur (22), les vis sans fin motrices (24) ainsi que les attaches à déformation (20) peuvent être remplacés individuellement par l'utilisateur.

8. Distributeur automatique de boissons selon la revendication 1, caractérisé en ce que les moyens de transport pour l'acheminement de la poudre pour boissons présentent respectivement une hélice transporteuse (6) disposée de manière pivotante dans le réservoir de poudre pour boissons (7).

9. Distributeur automatique de boissons selon la revendication 8, caractérisé en ce que l'hélice transporteuse (6) est respectivement disposée en alignement avec les arbres moteur (22) de l'engrenage (26) correspondant.

10. Distributeur automatique de boissons selon la revendication 2, caractérisé en ce que les engrenages (26) sont montés avec les électro-aimants (21) et les cadres porteurs (31) comme modules d'engrenage (10) échangeables.

11. Distributeur automatique de boissons selon la revendication 10, caractérisé en ce que dans le bâti (1), une barre de fixation (40) avec des ouvertures de logement disposées en forme de trame est prévue pour la fixation des modules d'engrenage (10).

12. Distributeur automatique de boissons selon la revendication 11, caractérisé en ce que les engrenages (26) sont suspendus dans les ouvertures de logements de la barre de fixation (40) au moyen de tenons de guidage (42) et qu'ils peuvent être verrouillés à l'aide d'un crochet d'arrêt à ressort.

13. Distributeur automatique de boissons selon l'une quelconque des revendications 2 à 12, caractérisé en ce que les engrenages (26) peuvent être couplés à intervalle par l'intermédiaire des électro-aimants (21) de façon qu'un temps de transport total nécessaire peut être divisé en plusieurs intervalles.
